# EUROPEAN PATENT SPECIFICATION

(11) **EP 2 957 507 B1**
(45) Date of publication and mention of the grant of the patent: **02.08.2017**
(21) Application number: 14752179.3
(22) Date of filing: 07.02.2014
(51) Int. Cl.: B65B 51/10, B29C 65/26

(54) **SEAL DEVICE**
SCHWEISSVORRICHTUNG
DISPOSITIF DE SOUDAGE

(30) Priority: 15.02.2013 JP 2013027965
(43) Date of publication of application: 23.12.2015
(73) Proprietor: Fuji Impulse Co., Ltd., Toyonaka-shi Osaka 561-0834 (JP)
(72) Inventor: YAMADA, Kazukuni, Toyonaka-shi Osaka 561-0834 (JP); KATAOKA, Yuichiro, Toyonaka-shi Osaka 561-0834 (JP); TARUMOTO, Kazuyoshi, Toyonaka-shi Osaka 561-0834 (JP); HARA, Kenji, Toyonaka-shi Osaka 561-0834 (JP); IWAMOTO, Shunichi, Toyonaka-shi Osaka 561-0834 (JP)
(74) Representative: Hannke, Christian
(86) International application number: PCT/JP2014/052871
(87) International publication number: WO 2014/126009

(56) References cited:
- DE-A1- 1 604 564
- JP-A- H11 208 608
- JP-A- 2002 249 111
- JP-A- 2006 335 431
- JP-A- 2007 099 339
- JP-A- 2007 099 339
- JP-A- 2010 280 446
- JP-B2- 3 625 855
- JP-B2- H0 759 417
- JP-U- S50 123 673
- SU-A1- 1 612 157
- US-A- 2 466 735

## Description

### TECHNICAL FIELD

The present invention relates to a seal device equipped with a pair of pressing parts that sandwiches and presses an object to provide a seal.

### BACKGROUND ART

Seal devices equipped with a pair of pressing parts that sandwiches and presses an object to provide a seal have hitherto been known (for example, Patent Document 1). In such a seal device, one pressing part is formed by part of a pipe, inside which hot water is passed. This way, with one pressing part being heated, the pair of pressing parts sandwiches and presses an object (an opening of a bag, for example) to provide a seal.

Any displacement of a sealed portion of the object immediately after the sealing of the object may result in an insufficient seal in the molten sealed portion (e.g., a tight seal may not be formed inside the bag). Therefore, in such a seal device, the object needs to be retained after the object has been sealed until the molten sealed portion cures. This results in a lower processing speed and an increase in the scale of the device, leading to lower efficiency.

### PRIOR ART DOCUMENT

### PATENT DOCUMENT

Patent Document 1: JP-A-2006-335431
Patent Document 2: US 2,466,735

The US patent with the number 2,466,735 shows a heat-sealing device which can rapidly be heated and substantially immediately cooled in order to provide a better operating control of the materials to be sealed.

### SUMMARY OF THE INVENTION

### PROBLEMS TO BE SOLVED BY THE INVENTION

Accordingly, in consideration of such circumstances, an object of the present invention is to provide a seal device that can be operated with improved efficiency. The current invention provides a seal device, which includes a pair of sealing units each having a pressing part for sandwiching and pressing an object to provide a seal as defined by the independent claim 1.

Further preferred embodiments are defined by the dependent claims 2 to 6. According to the present invention, the passage switch unit switches over to a state in which the heating medium passage portion is connected with the communication part so as to send the heating medium from the heating medium passage portion to the communication part. Thereby, the pressing part of at least one of the sealing units is heated, and the pair of pressing parts sandwiches and presses the object to provide a seal. At this time, the sealed portion of the object is molten.

The passage switch unit then switches over to a state in which the cooling medium passage portion is connected with the communication part so as to send the cooling medium from the cooling medium passage portion to the communication part. Thereby, the pressing part of at least one of the sealing units is cooled, so that the molten sealed portion cures. The object can thus be sealed.

Also, the seal device may have a configuration in which:
said one sealing unit further includes a sealing unit body that supports said pressing part,
said pressing part being disposed so as to protrude from said sealing unit body, and wherein
at least a side portion of said pressing part is configured to protrude from said sealing unit body in a decreasing amount toward an end.

In such a configuration, the pressing part is supported in the sealing unit body so as to protrude from the sealing unit body. At least in the side portions of the pressing part, the protruding amount of the pressing part protruding from the sealing unit body decreases toward the ends, so that, in the sealed portion of the object pressed by the pair of pressing parts, the thickness increases gradually toward the ends. The object can thus be sealed such that the end portions of the sealed portion of the object are hard to tear.

Also, the seal device may have a configuration in which:
said heating medium is a gas,
said medium passage includes a compressed gas passage portion for sending a compressed gas to said communication part, and
said passage switch unit is switched over to send the compressed gas to said communication part before the heating medium is sent to said communication part.

In such a configuration, by the switching of the passage switch unit, the compressed gas is sent from the compressed gas passage portion to the communication part before the heating medium, which is a gas, is sent from the heating medium passage portion to the communication part. Therefore, when the heating medium is sent to the communication part, any liquid (such as condensate liquid of the heating medium, or cooling medium, for example) is prevented from remaining inside the communication part. It is thereby prevented that the heating medium gives up its heat to such a liquid, so that the heat of the heating medium can be utilized effectively to heat the pressing part.

Also, the seal device may have a configuration in which:
said communication part is formed to have an arcuate inner surface at least on a lower side.

In such a configuration, the communication part has an arcuate inner surface at least in the lower part, so that the liquid remaining inside the communication part (such as condensate liquid of the heating medium, or cooling medium, for example) is collected in the arcuate lower part of the communication part. Therefore, by sending the compressed gas from the compressed gas passage portion to the communication part, such liquid can be drained reliably from the inside of the communication part. This way, any such liquid can be prevented from remaining inside the communication part reliably when the heating medium is sent to the communication part.

Also, the seal device may have a configuration in which:
said cooling medium is a liquid;
said medium passage includes a compressed gas passage portion for sending a compressed gas to said communication part; and
when the cooling medium is sent to said communication part, said passage switch unit is switched over to send the compressed gas to said communication part with the cooling medium.

In such a configuration, when the cooling medium, which is a liquid, is sent from the cooling medium passage portion to the communication part, the compressed gas is sent from the compressed gas passage portion to the communication part with the cooling medium by the switching of the passage switch unit, so that the cooling medium mixes with the compressed gas. Thereby, with the cooling medium atomized, for example, the heat of evaporation (latent heat) effectively acts to lower the temperature of the pressing part. The cooling medium can also create a turbulence, for example, inside the communication part to provide a stirring effect, to make the temperature of the cooling medium uniform, whereby the heat exchange between the cooling medium and the pressing part takes place effectively.

### EFFECTS OF THE INVENTION

As described above, the seal device according to the present invention provides the excellent effects of improving efficiency.

### BRIEF DESCRIPTION OF THE DRAWINGS

Fig. 1 is a side view showing essential parts of a seal device according to one embodiment of the present invention.
Fig. 2 is a front view showing essential parts of the seal device according to the embodiment.
Fig. 3 is a longitudinal cross-sectional view showing essential parts of a pair of sealing units according to the embodiment.
Fig. 4 is a block diagram of the seal device according to the embodiment.
Fig. 5 is a diagram explaining the operation of the pair of sealing units according to the embodiment and shows a longitudinal cross-sectional view of essential parts.
Fig. 6 is a diagram explaining the operation of the pair of sealing units according to the embodiment and shows a longitudinal cross-sectional view of essential parts.
Fig. 7 is a flowchart of the seal device according to the embodiment.
Fig. 8 is a time chart of the seal device according to the embodiment.
Fig. 9 is a longitudinal cross-sectional view showing essential parts of a sealing unit according to another embodiment of the present invention.
Fig. 10 is a longitudinal cross-sectional view showing essential parts of a sealing unit according to yet another embodiment of the present invention.

### MODE FOR CARRYING OUT THE INVENTION

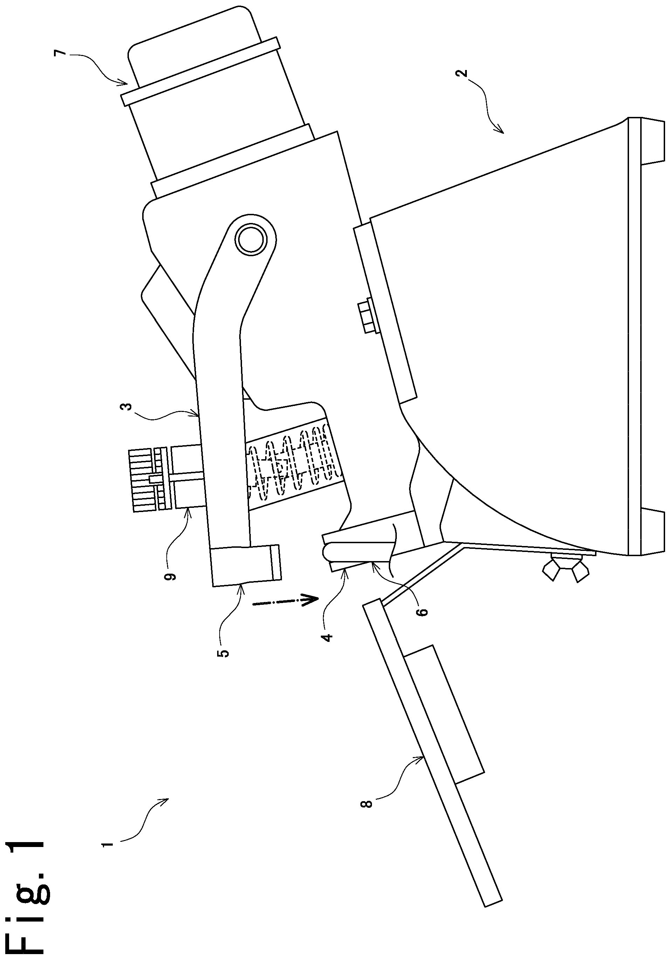

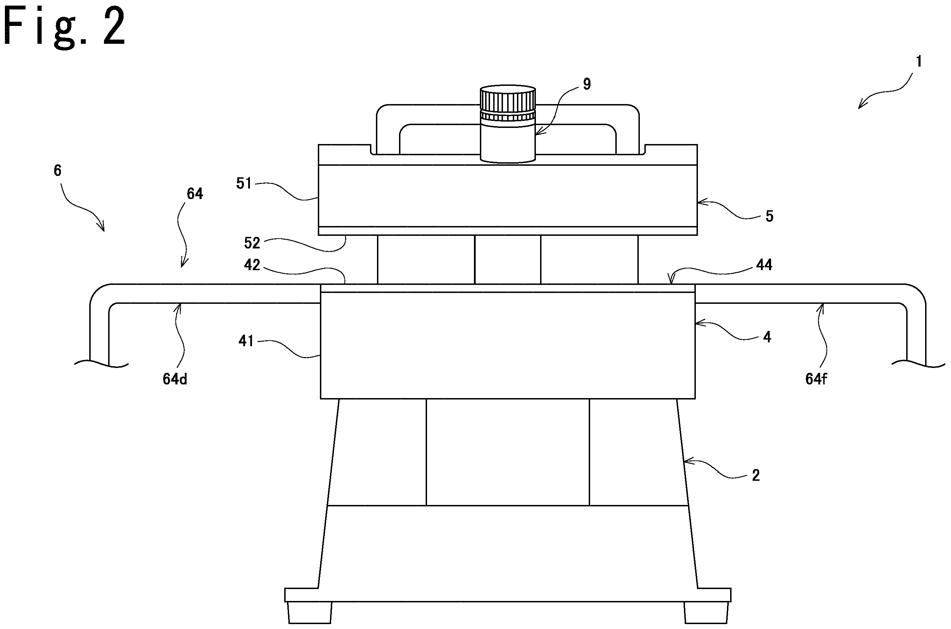

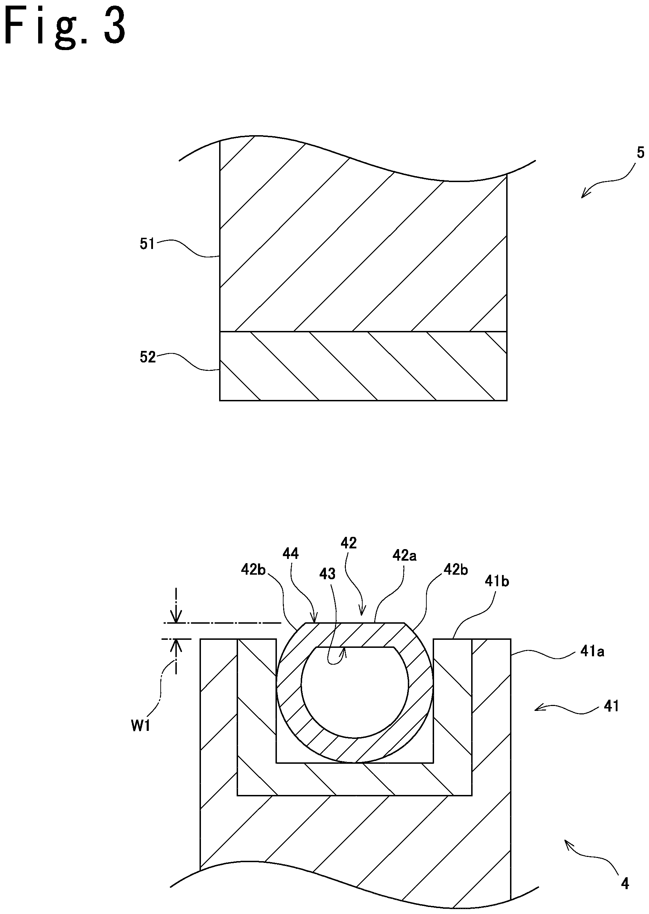

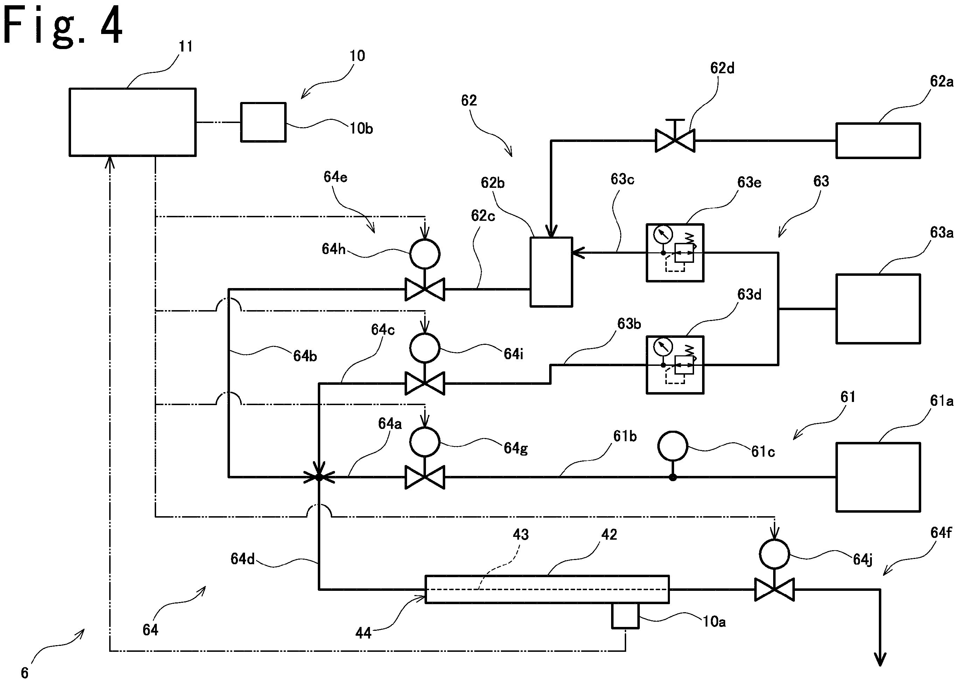

Hereinafter, one embodiment of a seal device according to the present invention will be described with reference to Fig. 1 to Fig. 8.

As shown in Fig. 1 to Fig. 4, a seal device 1 according to this embodiment includes a device main body 2 and a movable body 3 movable relative to the device main body 2. The seal device 1 also includes a first sealing unit 4 and a second sealing unit 5 that move toward and away from each other to sandwich an object (such as an opening of a bag, for example) to provide a seal, and a medium supply unit 6 that supplies a heating medium to the first sealing unit 4.

The seal device 1 includes a drive unit 7 for moving the movable body 3, a support unit 8 fixed to the device main body 2 for supporting the object placed thereon, and a pressure adjustment unit 9 that changes the pressure applied on the object by the pair of sealing units 4 and 5. The seal device 1 further includes an input unit 10 for inputting instructions and information, and a control unit 11 that performs various control operations.

The device main body 2 has the first sealing unit 4 secured thereto. The movable body 3 is formed in an elongated shape. The base end of the movable body 3 is attached rotatably to the device main body 2, while the distal end of the movable body 3 has the second sealing unit 5 fixed thereto. Therefore, when the drive unit 7 drives the movable body 3 to turn around its base end, the pair of sealing units 4 and 5 moves toward and away from each other.

The first sealing unit 4 includes a long first sealing unit body 41 coupled to an upper end portion of the device main body 2. The first sealing unit 4 also includes a first pressing part 42 for sandwiching and pressing an object between the first sealing unit 4 and the second sealing unit 5, and a communication part 43 for a heating medium to pass through for heat exchange between the first pressing part 42 and the heating medium. In this embodiment, the first sealing unit 4 includes a pipe 44, and part of the pipe 44 forms the first pressing part 42, while the inside of the pipe 44 forms the communication part 43.

The first sealing unit body 41 includes a base part 41 a coupled to the device main body 2, and a heat insulation part 41 b disposed between the base part 41 a and the pipe 44. In this embodiment, the base part 41 a is made of metal (such as aluminum, for example), while the heat insulation part 41 b is made of a heat-resistant hard resin (such as phenolic resin or polyphenylene sulfide resin, for example).

The base part 41 a has a recessed portion open upwards in an upper part, with the heat insulation part 41 b being fitted in this recessed portion and thereby retained. The heat insulation part 41 b includes a recessed portion open upwards, with the pipe 44 being accommodated in this recessed portion and thereby supported. The first sealing unit body 41 thus supports the first pressing part 42.

The first pressing part 42 includes a flat central portion 42a and curved side portions 42b. The first pressing part 42 is arranged at the upper end of the first sealing unit 4. The first pressing part 42 is disposed so as to protrude from the first sealing unit body 41. More specifically, the first pressing part 42 is formed by a portion of the pipe 44 upwardly protruding from the first sealing unit 41.

The pipe 44 is formed by processing a part of a cylindrical tube to have a flat portion. The flat portion of the pipe 44 is positioned at the top. The flat portion is located so as to protrude from the first sealing unit body 41, thereby forming the central portion 42a of the first pressing part 42.

Therefore, the protruding amount W1 in the central portion 42a in the widthwise direction of the first pressing part 42 protruding from the sealing unit body 41 is constant, while the protruding amount W1 of each side portion 42b in the widthwise direction protruding from the sealing unit body 41 reduces toward the ends in the widthwise direction. In a cross section orthogonal to the longitudinal direction, the upper inner surface of the communication part 43 is formed flat, while the lateral and lower inner surfaces of the communication part 43 are formed in an arcuate form. In this embodiment, the pipe 44 is made of a metal having high heat conductivity (such as copper, for example).

The second sealing unit 5 includes a long second sealing unit body 51 coupled to the distal end of the movable body 3, and a second pressing part 52 that sandwiches and presses the object between the second pressing part 52 and the first pressing part 42. In this embodiment, the second sealing unit body 51 is made of metal (such as aluminum, for example), while the second pressing part 52 is made of resin (such as silicone rubber, for example).

The second pressing part 52 is located at the lower end of the second sealing unit 5. More specifically, the second pressing part 52 is coupled to the lower end of the second sealing unit body 51. The second pressing part 52 is formed generally flat as a whole. The second pressing part 52 has elasticity to undergo elastic deformation when pressing the object between the second pressing part 52 and the first pressing part 42.

The medium supply unit 6 includes a heating medium supply unit 61 that supplies a heating medium, a cooling medium supply unit 62 that supplies a cooling medium, and a compressed gas supply unit 63 that supplies compressed gas. The medium supply unit 6 further includes a medium passage 64 for delivering each medium and the compressed gas to the first sealing unit 4.

The heating medium supply unit 61 includes a heating medium source 61 a, and a supply passage 61 b for sending the heating medium from the heating medium source 61 a to the medium passage 64. In this embodiment, the heating medium is a gas, and more particularly, steam. Namely, in this embodiment, the heating medium source 61 a is a boiler. The heating medium supply unit 61 includes a pressure detection unit (for example barometer) 61 c that detects (measures) the pressure of the heating medium.

The cooling medium supply unit 62 includes a cooling medium source 62a, a tank 62b that stores the cooling medium, and a supply passage 62c for sending the cooling medium from the tank 62b to the medium passage 64. In this embodiment, the cooling medium is a liquid, and more particularly, cold water. The cooling medium supply unit 62 includes a valve 62d that is opened when the cooling medium is to be supplied from the cooling medium source 62a to the tank 62b.

The compressed gas supply unit 63 includes a compressed gas source 63a, a supply passage 63b for sending the compressed gas from the compressed gas source 63a to the medium passage 64, and a pressurizing passage 63c for sending the compressed gas to the tank 62b to pressurize the tank 62b in the cooling medium supply unit 62. In this embodiment, the compressed gas is compressed air, and the compressed gas source 63a is a compressor.

The compressed gas supply unit 63 also includes pressure adjustment units (such as a gauged regulator, for example) 63d and 63e so that the pressure can be changed individually in each of the supply passage 63b and the pressurizing passage 63c. By making changes in the pressure adjustment units 63d and 63e, the mixture ratio of the cooling medium and compressed gas (i.e., flow amount of the cooling medium) sent to the communication part 43 can be changed.

The medium passage 64 includes a heating medium passage portion 64a for sending the heating medium to the communication part 43 of the first sealing unit 4, a cooling medium passage portion 64b for sending the cooling medium to the communication part 43, and a compressed gas passage portion 64c for sending the compressed gas to the communication part 43. The medium passage 64 also includes a common passage portion 64d that connects the respective passage portions 64a to 64c with the communication part 43.

The medium passage 64 includes a passage switch unit 64e for switchably connecting the respective passage portions 64a to 64c with the communication part 43 via the common passage portion 64d. The medium passage 64 further includes a discharge passage portion 64f for discharging each medium from the communication part 43.

The passage switch unit 64e includes a heating medium valve 64g that opens and closes the communication between the heating medium supply unit 61 and the heating medium passage portion 64a, a cooling medium valve 64h that opens and closes the communication between the cooling medium supply unit 62 and the cooling medium passage portion 64b, and a compressed gas valve 64i that opens and closes the communication between the compressed gas supply unit 63 and the compressed gas passage portion 64c. The discharge passage portion 64f includes a discharge valve 64j that opens and closes the communication between the communication part 43 and the outside of the device 1.

The input unit 10 includes a temperature detection unit 10a that detects the temperature of the first pressing part 42, and an operation part 10b operated by an operator when initiating a sealing operation. The information acquired by detection at the temperature detection unit 10a and the information regarding the operation of the operation part 10b are sent to the control unit 11. The control unit 11 controls the opening and closing of each of the valves 64g to 64j based on the information from the temperature detection unit 10a and the operation part 10b.

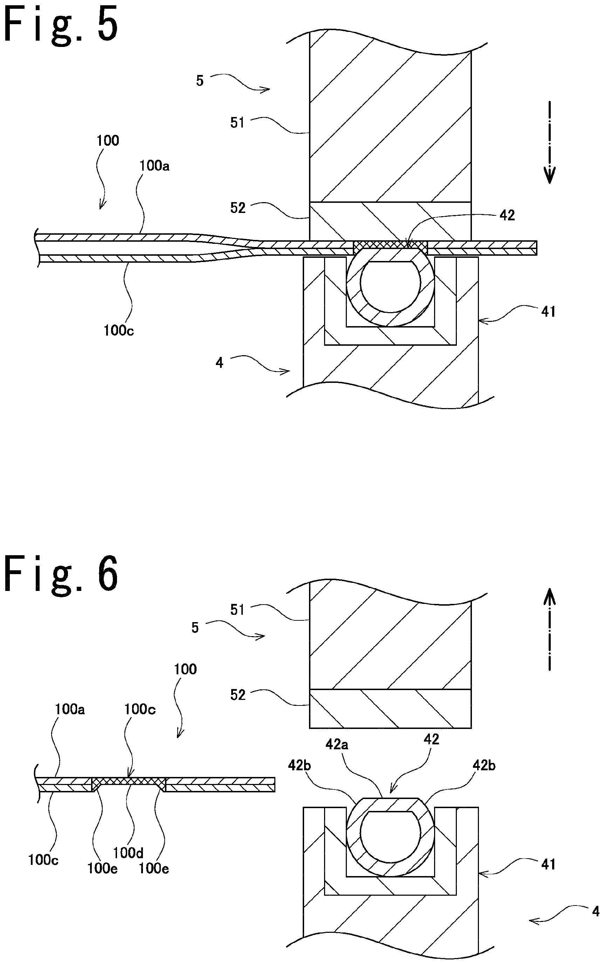

The seal device 1 according to this embodiment is configured as described above. Next, the sealing method with the use of the seal device 1 according to this embodiment will be described with reference to Fig. 5 and Fig. 6.

After an object 100 is inserted between the pair of sealing units 4 and 5, the operation part 10b is operated, whereby the second sealing unit 5 moves down to approach the first sealing unit 4, as shown in Fig. 5. With the pair of pressing parts 42 and 52 pressing the object 100, the first pressing part 42 is heated, and then cooled thereafter. This way, a first portion 100a and a second portion 100b of the object 100 are molten and then cured thereafter in a sealed portion 100c (hatched area in Fig. 5 and Fig. 6), and the object 100 is thus sealed in the sealed portion 100c.

After that, the second sealing unit 5 moves up to separate from the first sealing unit 4, and the object 100 is removed from the pair of sealing units 4 and 5. A central portion 100d of the sealed portion 100c has a constant thickness and a predetermined width, since the central portion 100d was pressed by the flat central portion 42a of the first pressing part 42 and the flat second pressing part 52. The thickness gradually increases towards ends in the side portions 100e of the sealed portion 100c, since the side portions 100e were pressed by the curved side portions 42b of the first pressing part 42 and the flat second pressing part 52.

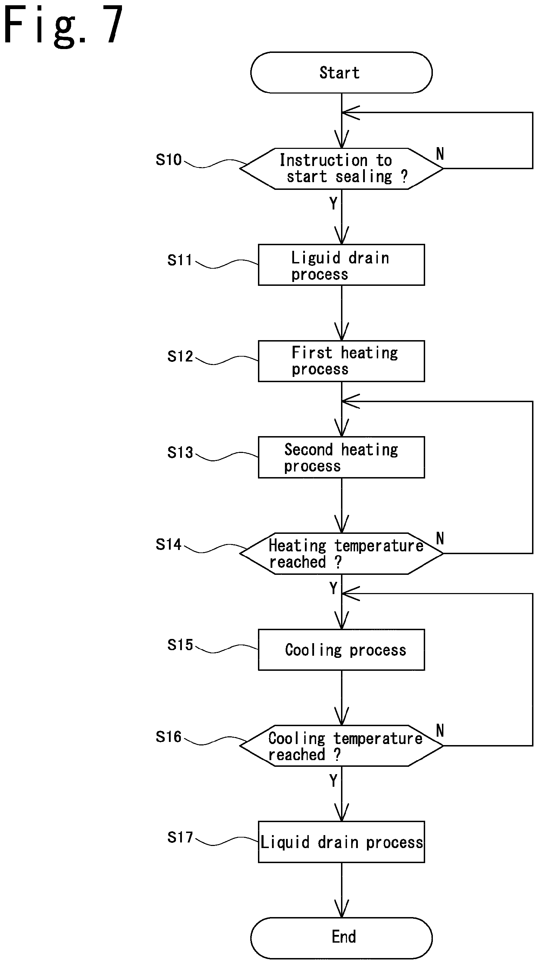

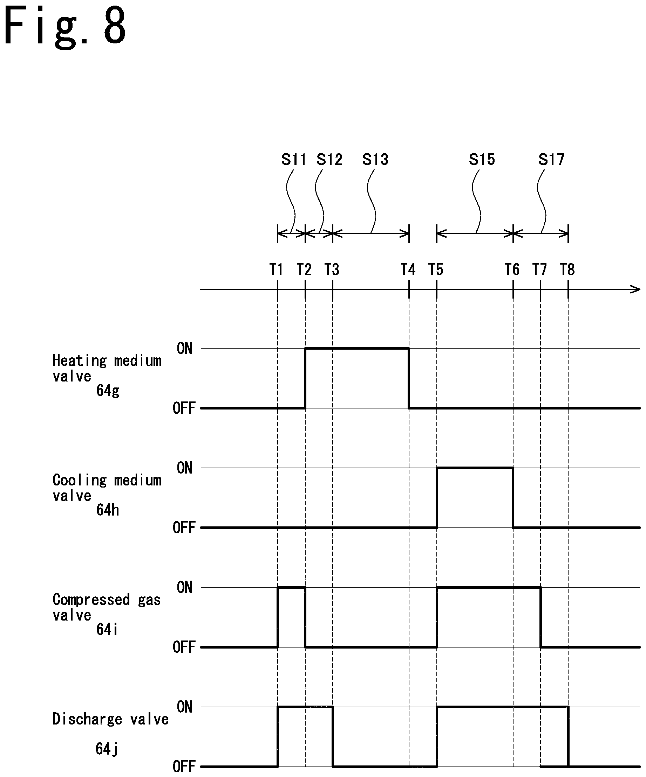

Next, the method of controlling the temperature of the first pressing part 42 in the seal device 1 according to this embodiment will be described with reference to Fig. 7 and Fig. 8.

When the operation part 10b is operated at time T1, whereupon an instruction to start sealing is received (Yes at S11), a discharge process (S12) is started, whereby the compressed gas valve 64i and the discharge valve 64j are opened. This causes the compressed air to be sent to the communication part 43 via the compressed gas passage portion 64c and the common passage portion 64d, so that water (condensed from the steam, and cold water) remaining in the communication part 43 of the first sealing unit 4 is drained from the communication part 43.

At time T2, a first heating process (S13) is started, wherein the heating medium valve 64g is opened, while the compressed gas valve 64i is closed. This causes the steam to be sent to the communication part 43 via the heating medium passage portion 64a and the common passage portion 64d, so that the first pressing part 42 is heated by the steam. At this time, the discharge valve 64j is kept open, so that the steam that has given up its heat to the first pressing part 42 (and the condensate water) is discharged from the communication part 43.

At time T3, a second heating process (S14) is started, wherein the discharge valve 64j is closed. This raises the pressure inside the communication part 43, and raises the temperature of the first pressing part 42. At time T4, the temperature detection unit 10a detects that the temperature of the first pressing part 42 has reached a preset heating temperature (Yes at S15), whereupon the heating medium valve 64g is closed.

At time T5, a cooling process (S16) is started, wherein the cooling medium valve 64h, compressed gas valve 64i, and discharge valve 64j are opened. This causes the cold water to be sent to the communication part 43 via the cooling medium passage portion 64b and the common passage portion 64d, and the compressed air to be sent to the communication part 43 with the cold water. The first pressing part 42 is cooled by the cold water, and then the cold water and compressed air are discharged from the communication part 43.

At time T6, the temperature detection unit 10a detects that the temperature of the first pressing part 42 has reached a preset cooling temperature (Yes at S17), whereupon the discharge process (S18) is started, so that the cooling medium valve 64h is closed. This causes only the compressed air to be sent to the communication part 43, so that the cold water inside the communication part 43 is drained from the communication part 43. After that, at time T7, the compressed gas valve 64i is closed, and at time T8, the discharge valve 64j is closed. This way, the first pressing part 42 is heated and cooled.

As described above, with the seal device 1 according to this embodiment, the passage switch unit 64e switches over to connect the heating medium passage portion 64a with the communication part 43 so as to send the heating medium from the heating medium passage portion 64a to the communication part 43. The first pressing part 42 is thereby heated, and the pair of pressing parts 42 and 52 sandwiches and presses the object 100 to provide a seal. At this time, the sealed portion 100c of the object 100 is molten.

The passage switch unit 64e then switches over to connect the cooling medium passage portion 64b with the communication part 43 so as to send the cooling medium from the cooling medium passage portion 64b to the communication part 43. The first pressing part 42 is thereby cooled, so that the molten sealed portion 100c cures. The object 100 can thus be sealed.

In this way, the seal device 1 according to this embodiment can be operated with improved efficiency. Moreover, no electrically driven components are used in the pair of sealing units 4 and 5, and so the seal device 1 according to this embodiment can also be used as an explosion-proof seal device 1.

In the seal device 1 according to this embodiment, the first pressing part 42 is supported in the first sealing unit body 41 so as to protrude from the first sealing unit body 41. In the side portions 42b of the first pressing part 42, the protruding amount W1 of the first pressing part 42 protruding from the first sealing unit body 41 decreases toward the ends, so that, in the sealed portion 100c of the object 100 pressed by the pair of pressing parts 42 and 52, the thickness of the side portions 100e increases gradually toward the ends. The object 100 can thus be sealed such that the side portions 100e of the sealed portion 100c are hard to tear.

In the seal device 1 according to this embodiment, by the switching of the passage switch unit 64e, the compressed gas is sent from the compressed gas passage portion 64c to the communication part 43 before the heating medium, which is a gas, is sent from the heating medium passage portion 64a to the communication part 43. Therefore, when the heating medium is sent to the communication part 43, any liquid (such as condensate liquid of the heating medium, or cooling medium, for example) is prevented from remaining inside the communication part 43. It is thereby prevented that the heating medium gives up its heat to such a liquid, so that the heat of the heating medium can be utilized effectively to heat the first pressing part 42.

In the seal device 1 according to this embodiment, the communication part 43 has an arcuate inner surface in the lower part, so that liquid remaining inside the communication part 43 (such as condensate liquid of the heating medium, or cooling medium, for example) is collected in the arcuate lower part of the communication part 43. Therefore, by sending the compressed gas from the compressed gas passage portion 64c to the communication part 43, such liquid can be drained reliably from the inside of the communication part 43. This way, any such liquid can be prevented from remaining inside the communication part 43 reliably when the heating medium is sent to the communication part 43.

In the seal device 1 according to this embodiment, when the cooling medium, which is a liquid, is sent from the cooling medium passage portion 64b to the communication part 43, the compressed gas is sent from the compressed gas passage portion 64c to the communication part 43 with the cooling medium by the switching of the passage switch unit 64e, so that the cooling medium mixes with the compressed gas. Thereby, with the cooling medium atomized, for example, the heat of evaporation (latent heat) effectively acts to lower the temperature of the first pressing part 42. The cooling medium can also create a turbulence, for example, inside the communication part 43 to provide a stirring effect, to make the temperature of the cooling medium uniform, whereby the heat exchange between the cooling medium and the first pressing part 42 takes place effectively.

The seal device is not limited to the configuration of the embodiment described above, and the effects are not limited to those described above. It goes without saying that the seal device can be variously modified within the scope of the appended claims. Not to mention, the configurations and methods or the like according to various modification examples described below, for example, may be freely selected and adopted to the configurations or methods of the embodiment described above.

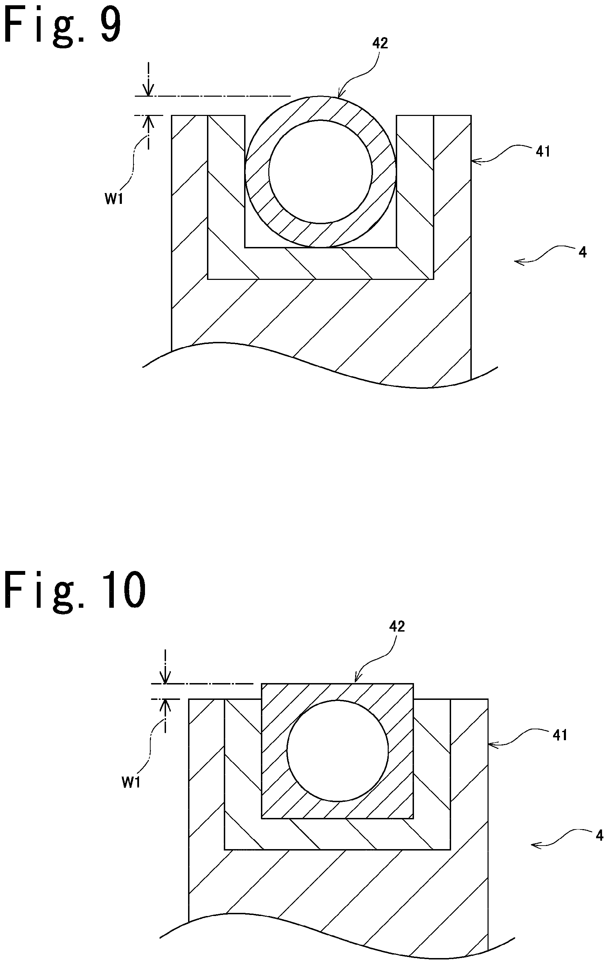

In the seal device 1 according to this embodiment, the side portions 42b of the first pressing part 42 are configured such that the protruding amount W1 from the first sealing unit body 41 decreases towards the ends. However, the seal device 1 according to the present invention is not limited to such a configuration. For example, in the seal device 1 according to the present invention, as shown in Fig. 9, the first pressing part 42 may be configured such that the protruding amount W1 from the first sealing unit body 41 entirely decreases towards the ends, or alternatively, as shown in Fig. 10, the first pressing part 42 may be configured to protrude from the first sealing unit body 41 entirely with the same protruding amount W1.

In the seal device 1 according to this embodiment, the side portions 42b of the first pressing part 42 are formed in a curved shape. However, the seal device 1 according to the present invention is not limited to such a configuration. For example, in the seal device 1 according to the present invention, the side portions 42b of the first pressing part 42 may be formed flat and intersect the central portion 42a at an angle.

In the seal device 1 according to this embodiment, the communication part 43 is provided only to the first sealing unit 4. However, the seal device 1 according to the present invention is not limited to such a configuration. For example, in the seal device 1 according to the present invention, the communication part 43 may be provided to both of the pair of sealing units 4 and 5.

In the seal device 1 according to this embodiment, only one communication part 43 is provided to the first sealing unit 4 for both of the heating medium and cooling medium to pass through. However, the seal device 1 according to the present invention is not limited to such a configuration. For example, the seal device 1 according to the present invention may be configured to include a plurality of communication parts 43, wherein each of the communication parts 43 allows passage of only one of the heating medium and the cooling medium.

In the seal device 1 according to this embodiment, the communication part 43 is formed to have arcuate inner surfaces in the lower part and in the sides. However, the seal device 1 according to the present invention is not limited to such a configuration. For example, in the seal device 1 according to the present invention, the communication part 43 may be formed to have an arcuate inner surface only in the lower part, or alternatively, the communication part 43 may be formed to have a flat inner surface in the lower part.

In the seal device 1 according to this embodiment, the heating medium is a gas (steam). However, the seal device 1 according to the present invention is not limited to such a configuration. For example, in the seal device 1 according to the present invention, the heating medium may be a liquid, and more specifically, hot water.

In the seal device 1 according to this embodiment, the cooling medium is a liquid (cold water). However, the seal device 1 according to the present invention is not limited to such a configuration. For example, in the seal device 1 according to the present invention, the cooling medium may be a gas.

In the seal device 1 according to this embodiment, only the second sealing unit 5 is movable. However, the seal device 1 according to the present invention is not limited to such a configuration. For example, the seal device 1 according to the present invention may be configured such that only the first sealing unit 4 is movable, or alternatively such that both of the pair of sealing units 4 and 5 are movable.

The seal device 1 according to the present invention may be configured to have a pre-heating process so as to raise the temperature of the first pressing part 42 to a predetermined level when the temperature lowers to a predetermined level during a wait time. In the pre-heating process, in the state in which all the valves 64g to 64j are closed, the heating medium valve 64g and the discharge valve 64j are opened, and after a predetermined time has passed, the heating medium valve 64g is closed while the compressed gas valve 64i is opened, and after a predetermined time has passed, the compressed gas valve 64i is closed, and after a predetermined time has further passed, the discharge valve 64j is closed.

The seal device 1 according to the present invention can be applied to any type of seal devices, as long as the seal device includes a pair of sealing units 4 and 5 having pressing parts 42 and 52 that sandwich and press an object 100 to provide a seal.

### DESCRIPTION OF REFERENCE SIGNS

- 1: Seal device
- 2: Device main body
- 3: Movable body
- 4: First sealing unit
- 5: Second sealing unit
- 6: Medium supply unit
- 7: Drive unit
- 8: Support unit
- 9: Pressure adjustment unit
- 10: Input unit
- 10a: Temperature detection unit
- 10b: Operation part
- 11: Control unit
- 41: First sealing unit body
- 41a: Base part
- 41b: Heat insulation part
- 42: First pressing part
- 42a: Central portion
- 42b: Side portion
- 43: Communication part
- 44: Pipe
- 51: Second sealing unit body
- 52: Second pressing part
- 61: Heating medium supply unit
- 61a: Heating medium source
- 61b: Supply passage
- 61c: Pressure detection unit
- 62: Cooling medium supply unit
- 62a: Cooling medium source
- 62b: Tank
- 62c: Supply passage
- 62d: Valve
- 63: Compressed gas supply unit
- 63a: Compressed gas source
- 63b: Supply passage
- 63c: Pressurizing passage
- 63d: Pressure adjustment unit
- 63e: Pressure adjustment unit
- 64: Medium passage
- 64a: Heating medium passage portion
- 64b: Cooling medium passage portion
- 64c: Compressed gas passage portion
- 64d: Common passage portion
- 64e: Passage switch unit
- 64f: Discharge passage portion
- 64g: Heating medium valve
- 64h: Cooling medium valve
- 64i: Compressed gas valve
- 64j: Discharge valve
- 100: Object
- 100a: First portion
- 100b: Second portion
- 100c: Sealed portion
- 100d: Central portion
- 100e: Side portion
- W1: Protruding amount

## Claims

1. A seal device (1), comprising:
a pair of sealing units (4, 5) each having a pressing part (42, 52) for sandwiching and pressing an object (100) to provide a seal; and
a medium passage (64) that sends a heating medium to at least one of said pair of sealing units (4, 5),
said at least one sealing unit (4, 5) including a communication part (43) for the heating medium to pass through for heat exchange between said pressing part (42, 52) and the heating medium, wherein said heating medium is steam, and said medium passage (64) includes a heating medium passage portion (64a) for sending a heating medium to said communication part (43) so as to heat said pressing part (42, 52) of said at least one sealing unit (4, 5), a cooling medium passage portion (64b)for sending a cooling medium to said communication part (64) so as to cool said pressing part (42, 52) of said at least one sealing unit (4, 5), and a passage switch unit (64e) that switches between a state in which said heating medium passage portion (64a) and said communication part (43) are connected, and a state in which said cooling medium passage portion (64b) and said communication part (43) are connected, **characterized in that** said medium passage (64) includes a discharge passage portion (64f) that is configured to open and close the communication between said communication part (43) and outside of the device (1) so as to discharge the heating medium and the cooling medium from said communication part (43) to the outside of the device (1); and said discharge passage portion (64f) is configured to open said communication part (43) to the outside of the device (1) before said passage switch unit (64e) is switched over to a state wherein said heating medium passage portion (64a) is connected with said communication part (43), and closes said communication part (43) from the outside of the device (1) after a predetermined time has passed in the state wherein said heating medium passage portion (64a) is connected with said communication part (43).

2. The seal device according to claim 1, wherein
said one sealing unit further includes a sealing unit body that supports said pressing part,
said pressing part being disposed so as to protrude from said sealing unit body, and wherein
at least a side portion of said pressing part is configured to protrude from said sealing unit body in a decreasing amount toward an end.

3. The seal device (1) according to claim 1, wherein
said heating medium is a gas,
said medium passage (64) includes a compressed gas passage portion (64c) for sending a compressed gas to said communication part (43), and said passage switch unit (64e) is configured to switch over to send the compressed gas to said communication part (43) before the heating medium is sent to said communication part (43).

4. The seal device (1) according to claim 3, wherein
said communication part (43) is formed to have an arcuate inner surface at least on a lower side.

5. The seal device (1) according to claim 1, wherein
said cooling medium is a liquid;
said medium passage (64) includes a compressed gas passage portion (64c) for sending a compressed gas to said communication part (43); and
when the cooling medium is sent to said communication part (43), said passage switch unit (64e) is configured to switch over to send the compressed gas to said communication part (43) with the cooling medium.

6. The seal device (1) according to claim 1, wherein said one sealing unit (4, 5) includes a sealing unit body (41, 51) that supports said pressing part (42, 52), said pressing part (42, 52) includes a flat central portion (42a) and curved side portions (42b) and being disposed so as to protrude from said sealing unit body (41, 51).

## Patentansprüche

1. Verschlussvorrichtung (1), umfassend:
ein Paar Verschlusseinheiten (4, 5), wobei jede ein Druckteil (42, 52) zum Einzwängen und Pressen eines Objekts (100) aufweist, um einen Verschluss bereitzustellen; und
einen Mediumdurchlass (64), welcher ein Heizmedium an zumindest ein Paar der Verschlusseinheiten (4, 5) sendet,
wobei die zumindest eine Verschlusseinheit (4, 5) ein Kommunikationsteil (43) zum Durchleiten des Heizmediums zum Wärmeaustausch zwischen dem Druckteil (42, 52) und dem Heizmedium beinhaltet, wobei das Heizmedium Dampf ist, und
wobei der Mediumdurchlass (64) einen Heizmediumdurchlassanteil (64a) zum Senden eines Heizmediums an das Kommunikationsteil (43), um das Druckteil (42, 52) der zumindest einen Verschlusseinheit (4, 5) zu erwärmen, einen Kühlmediumdurchlassanteil (64b), um das Druckteil (42, 52) der zumindest einen Verschlusseinheit (4, 5) zu kühlen, und eine Durchlassschaltereinheit (64e), welche zwischen einem Zustand, in welchem der Heizmediumdurchlassanteil (64a) und das Kommunikationsteil (43) verbunden sind, und einem Zustand, in welchem der Kühlmediumdurchlassanteil (64b) und das Kommunikationsteil (43) verbunden sind, beinhaltet, **dadurch gekennzeichnet, dass** der Mediumdurchlass (64) einen Ablassdurchlassanteil (64f) beinhaltet, welcher ausgebildet ist, die Verbindung zwischen dem Kommunikationsteil (43) und außerhalb der Vorrichtung (1) zu öffnen und zu schließen, um das Heizmedium und das Kühlmedium von dem Kommunikationsteil (43) nach außerhalb der Vorrichtung abzulassen; und der Ablassdurchlassanteil (64f) ausgebildet ist, das Kommunikationsteil (43) nach außerhalb der Vorrichtung (1) zu öffnen, bevor die Durchlassschaltereinheit (64e) umgeschaltet wird in einen Zustand, in welchem der Heizmediumdurchlassanteil (64a) mit dem Kommunikationsteil (43) verbunden ist, und das Kommunikationsteil (43) von außerhalb der Vorrichtung zu schließen, nachdem eine vorbestimmte Zeit vergangen ist in dem Zustand, in welchem der Heizmediumdurchlassanteil (64a) mit dem Kommunikationsteil (43) verbunden ist.

2. Verschlussvorrichtung (1) nach Anspruch 1, wobei
die eine Verschlusseinheit weiter einen Verschlusseinheitskörper beinhaltet, welcher das Druckteil unterstützt,
wobei das Druckteil angeordnet ist, um von dem Verschlusseinheitskörper hervorzustehen, und wobei
zumindest ein Seitenanteil des Druckteils ausgebildet ist, um von dem Verschlusseinheitskörper hervorzustehen in einem sinkenden Maß zu einem Ende hin.

3. Verschlussvorrichtung (1) nach Anspruch 1, wobei
das Heizmedium ein Gas ist,
wobei der Mediumdurchlass (64) einen Druckgasdurchlassanteil (64c) zum Senden eines Druckgases an das Kommunikationsteil (43) beinhaltet, und
wobei die Durchlassschaltereinheit (64e) ausgebildet ist umzuschalten, um das Druckgas an das Kommunikationsteil (43) zu senden, bevor das Heizmedium an das Kommunikationsteil (43) gesendet ist.

4. Verschlussvorrichtung (1) nach Anspruch 3, wobei
das Kommunikationsteil (43) ausgebildet ist, eine bogenförmige innere Oberfläche zumindest an einer unteren Seite aufzuweisen.

5. Verschlussvorrichtung (1) nach Anspruch 1, wobei
das Kühlmedium eine Flüssigkeit ist;
und wobei der Mediumdurchlass (64) einen Druckgasdurchlassanteil (64c) zum Senden eines Druckgases an das Kommunikationsteil (43) beinhaltet, und wenn das Kühlmedium an das Kommunikationsteil (43) gesendet wird, die Durchlassschaltereinheit (64e) ausgebildet ist umzuschalten, um das Druckgas mit dem Kühlmedium an das Kommunikationsteil (43) zu senden.

6. Verschlussvorrichtung (1) nach Anspruch 1, wobei
die Verschlusseinheit (4, 5) einen Verschlusseinheitskörper (41, 51) beinhaltet, welcher das Druckteil (42, 52) unterstützt, wobei das Druckteil (42, 52) einen flachen zentralen Anteil (42a) und gekrümmte Seitenanteile (42b) aufweist und angeordnet ist, um von dem Verschlusseinheitskörper (41, 51) hervorzustehen.

## Revendications

1. Dispositif de soudage (1) comprenant :
une paire d'unités de soudage (4, 5) ayant chacune une partie de pression (42, 52) pour prendre en sandwich et presser un objet (100) pour obtenir unsceau ; et
un passage de milieu (64) qui envoie un milieu chauffant à au moins une de ladite paire d'unités de soudage (4, 5),
ladite au moins une unité de soudage (4, 5) comprenant une partie de communication (43) pour le passage du milieu chauffant à travers celle-ci en vue d'un échange de chaleur entre ladite partie de pression (42, 52) et le milieu chauffant, ledit milieu chauffant étant de la vapeur, et
ledit passage de milieu (64) comprend une partie passage de milieu chauffant (64a) pour envoyer un milieu chauffant à ladite partie de communication (43) de façon à chauffer ladite partie de pression (42, 52) de ladite au moins une unité de soudage (4, 5), une partie passage de milieu de refroidissement (64b) pour envoyer un milieu de refroidissement à ladite partie de communication (64) de façon à refroidir ladite partie de pression (42, 52) de ladite au moins une unité de soudage (4, 5), et une unité de commutation de passage (64e) qui commute entre un état dans lequel ladite partie passage de milieu chauffant (64a) et ladite partie de communication (43) sont reliées, et un état dans lequel ladite partie passage de milieu de refroidissement (64b) et ladite partie de communication (43) sont reliées, **caractérisé par le fait que** ledit passage de milieu (64) comprend une partie passage d'évacuation (64f) qui est configurée pour ouvrir et fermer la communication entre ladite partie de communication (43) et l'extérieur du dispositif (1) de façon à évacuer le milieu chauffant et le milieu de refroidissement de ladite partie de communication (43) vers l'extérieur du dispositif (1) ; et ladite partie passage d'évacuation (64f) est configurée pour ouvrir ladite partie de communication (43) vers l'extérieur du dispositif (1) avant que ladite unité de commutation de passage (64e) ne soit commutée à un état dans lequel ladite partie passage de milieu chauffant (64a) est reliée à ladite partie de communication (43), et ferme ladite partie de communication (43) vis-à-vis de l'extérieur du dispositif (1) après qu'une durée prédéterminée s'est écoulée dans l'état dans lequel ladite partie passage de milieu chauffant (64a) est reliée à ladite partie de communication (43).

2. Dispositif de soudage selon la revendication 1, dans lequel :
ladite unité de soudage comprend en outre un corps d'unité de soudage qui supporte ladite partie de pression,
ladite partie de pression étant disposée de façon à faire saillie à partir dudit corps d'unité de soudage, et
au moins une partie latérale de ladite partie de pression est configurée pour faire saillie, à partir dudit corps d'unité de soudage, sur une étendue qui diminue vers une extrémité.

3. Dispositif de soudage (1) selon la revendication 1, dans lequel :
ledit milieu chauffant est un gaz,
ledit passage de milieu (64) comprend une partie passage de gaz comprimé (64c) pour envoyer un gaz comprimé à ladite partie de communication (43), et
ladite unité de commutation de passage (64e) est configurée pour commuter de façon à envoyer le gaz comprimé à ladite partie de communication (43) avant que le milieu chauffant ne soit envoyé à ladite partie de communication (43).

4. Dispositif de soudage (1) selon la revendication 3, dans lequel :
ladite partie de communication (43) est formée pour avoir une surface interne arquée au moins sur un côté inférieur.

5. Dispositif de soudage (1) selon la revendication 1, dans lequel :
ledit milieu de refroidissement est un liquide ;
ledit passage de milieu (64) comprend une partie passage de gaz comprimé (64c) pour envoyer un gaz comprimé à ladite partie de communication (43) ; et
lorsque le milieu de refroidissement est envoyé à ladite partie de communication (43), ladite unité de commutation de passage (64e) est configurée pour commuter de façon à envoyer le gaz comprimé à ladite partie de communication (43) avec le milieu de refroidissement.

6. Dispositif de soudage (1) selon la revendication 1, dans lequel :
ladite unité de soudage (4, 5) comprend un corps d'unité de soudage (41, 51) qui supporte ladite partie de pression (42, 52), ladite partie de pression (42, 52) comprend une partie centrale plate (42a) et des parties latérales incurvées (42b) et étant disposée de façon à faire saillie à partir dudit corps d'unité de soudage (41, 51).
